(19) Europäisches Patentamt
European Patent Office
Office européen des brevets

(11) **EP 2 974 431 B1**

(12) **FASCICULE DE BREVET EUROPEEN**

(45) Date de publication et mention de la délivrance du brevet:
**30.10.2019 Bulletin 2019/44**

(21) Numéro de dépôt: **14720175.0**

(22) Date de dépôt: **13.03.2014**

(51) Int Cl.:
*H04W 16/18* *(2009.01)*     *H04W 16/26* *(2009.01)*

(86) Numéro de dépôt international:
**PCT/FR2014/050584**

(87) Numéro de publication internationale:
**WO 2014/140495 (18.09.2014 Gazette 2014/38)**

(54) **PROCÉDÉ DE PRÉDICTION DU NIVEAU DE CHAMP RADIO ET/OU DE LA DURÉE DE PROPAGATION DES RÉSEAUX DE TÉLÉPHONIE CELLULAIRE UTILISANT DES BASES DE DONNÉES TERRAIN À HAUTE RÉSOLUTION**

VERFAHREN ZUR VORHERSAGE DES NIVEAUS EINES FUNKFELDES UND/ODER DER DAUER DER AUSBREITUNG VON MOBILTELEFONNETZEN ANHAND VON HOCHAUFLÖSENDEN GELÄNDEDATENBANKEN

METHOD FOR PREDICTING THE LEVEL OF RADIO FIELD AND/OR THE DURATION OF PROPAGATION OF CELLULAR TELEPHONE NETWORKS USING HIGH-RESOLUTION TERRAIN DATABASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2013 FR 1352242**

(43) Date de publication de la demande:
**20.01.2016 Bulletin 2016/03**

(73) Titulaire: **Google LLC**
**Mountain View, CA 94043 (US)**

(72) Inventeurs:
• **BARBOSA DA TORRE, Serge**
  **F-13005 Marseille (FR)**
• **FATTOUCH, Imad**
  **F-75013 Paris (FR)**
• **BARBOSA DA TORRE, Norbert**
  **F-22730 Trégastel (FR)**

(74) Mandataire: **Betten & Resch**
**Patent- und Rechtsanwälte PartGmbB**
**Maximiliansplatz 14**
**80333 München (DE)**

(56) Documents cités:
**EP-A2- 2 230 863**

• **COMBEAU P ET AL: "Efficient 2-D ray-tracing method for narrow and wideband channel characterisation in microcellular configurations", IEE PROCEEDINGS: MICROWAVES, ANTENNAS AND PROPAGATION, IEE, STEVENAGE, HERTS, GB, vol. 153, no. 6, 4 décembre 2006 (2006-12-04), pages 502-509, XP006027746, ISSN: 1350-2417, DOI: 10.1049/IP-MAP:20045142**
• **CORRE Y ET AL: "Three-Dimensional Urban EM Wave Propagation Model for Radio Network Planning and Optimization Over Large Areas", IEEE TRANSACTIONS ON VEHICULAR TECHNOLOGY, IEEE SERVICE CENTER, PISCATAWAY, NJ, US, vol. 58, no. 7, 1 septembre 2009 (2009-09-01), pages 3112-3123, XP011267703, ISSN: 0018-9545, DOI: 10.1109/TVT.2009.2016973**
• **ZHIHUA LAI ET AL: "A new approach to solve angular dispersion of discrete ray launching for urban scenarios", ANTENNAS&PROPAGATION CONFERENCE, 2009. LAPC 2009. LOUGHBOROUGH, IEEE, PISCATAWAY, NJ, USA, 16 novembre 2009 (2009-11-16), pages 133-136, XP031579650, ISBN: 978-1-4244-2720-8**

**Description**

Domaine technique

La présente invention s'applique avantageusement à la phase de caractérisation et d'établissement des réseaux de téléphonie mobile à installer sur un territoire et plus particulièrement elle concerne un procédé de prédiction du niveau de champs radio, électromagnétique ou sonore utilisant un modèle de propagation basé sur la technique de lancer de rayons en exploitant des bases de données terrain à haute résolution dans des environnements tels que, par exemple, les environnements urbains à forte densité. Dans un but de simplification et ce, pour une meilleure appréhension de l'invention, l'expression « prédiction du niveau de champ » est dans le préambule choisie. Cependant il faut bien comprendre que cette expression, volontairement concise, renferme et répond non seulement à la notion de niveau de champ en tant que telle, mais également aux diverses autres caractéristiques dudit champ telles que, entre autres, le temps de propagation du signal radio ou le profil temporel du canal. Conformément à cela, de manière authentiquement avantageuse, la mise en œuvre de l'invention permettra, selon une première branche, de déterminer, aisément et efficacement, des paramètres de fonctionnement et des positions optimales des stations ou répéteurs du réseau de manière à définir précisément les limites des cellules radio correspondantes et ainsi optimiser l'utilisation des ressources radio allouées au service mobile. De même et selon une seconde branche, la mise en œuvre de l'invention permettra, ainsi et si désiré simultanément, de prédire la durée de propagation du signal et le profil temporel de canal. La connaissance de ces caractéristiques est de la plus grande importance concernant des applications telles que la géolocalisation par méthodes de triangulation et pareillement relativement aux estimations de canal radio pour la caractérisation du canal et des performances concernant les systèmes multi-antennes tels que le MIMO **(Multiple-Input Multiple-Output** ou en français, « entrées multiples, sorties multiples ») ou bien d'autres applications nécessitant de telles informations. Dans ce cas également, où des multi-antennes de type MIMO sont utilisées, pour obtenir avantageusement un profil temporel et angulaire du canal, il est possible et utile de déduire et donc de connaître, à partir de l'analyse faite au moyen de modèles de propagation à lancer de rayons et donc de la connaissance du niveau de champ et des durées de propagation, les angles d'incidence de départ (émetteur) et d'arrivée (récepteur) radio.

Technique antérieure

Les modèles de propagation à lancer de rayons sont largement connus et très couramment utilisés dans une foultitude d'applications, notamment dans l'évaluation prédictive de la couverture radio d'une cellule en phase de définition de réseaux. Ce sont des modèles déterministes, ces modèles reposant sur une connaissance précise de la réalité environnementale et nécessitant de disposer de bases de données géographiques de type contours de bâtiments. Ils permettent de prédire les différents trajets de propagation dans une configuration donnée. Après ajustement de la bande de fréquence considérée, ces modèles permettent également par simulation de réaliser des études paramétriques pour analyser, par exemple, l'influence des diagrammes d'antennes ou des caractéristiques des matériaux, ce qui est très significativement moins onéreux que le fait de lancer un grand nombre de campagnes de mesures.

Pour rappel, la propagation radio dans une cellule doit satisfaire aux deux exigences essentielles que sont l'émission d'une puissance non excessive par la station et la réception par les terminaux de signaux radio de puissance suffisante, chacune de ces exigences répondant à des spécifications reposant sur un certain nombre de valeurs caractéristiques à ne pas dépasser. Par exemple, une augmentation de la puissance d'émission d'une station accroîtrait inévitablement la taille de la cellule en provoquant des interférences entre cellules voisines. Egalement, côté terminaux mobiles, la puissance maximale doit être limitée par des impératifs de sécurité des utilisateurs et d'autonomie de leurs batteries.

Divers procédés de prédiction du niveau de champs radio, électromagnétique ou sonore, sont connus et utilisés parmi lesquels celui d'une grande efficacité qui consiste à effectuer un calcul prévisionnel des atténuations et/ou de durée de propagation radio en une pluralité de points de la cellule en utilisant une base de données vectorielle fournie, par exemple, par l'Institut Géographique National (IGN), base vectorielle représentant la carte de la zone géographique analysée avec les bâtiments et autres reliefs du sursol qu'elle comporte. Une base de données vectorielle est définie comme un ensemble de polygones représentant chacun un objet géographique associé à une ou plusieurs informations qualitatives et/ou quantitatives. Par exemple, un polygone peut représenter le contour d'un bâtiment et peut être associé à une information de hauteur de ce bâtiment, ou bien le polygone peut représenter une façade de bâtiment, auquel cas un ensemble de polygones peuvent définir précisément un bâtiment en 3 dimensions. Egalement, un polygone peut représenter un arbre avec une information de hauteur, ou bien un polygone peut représenter une zone avec de la végétation avec une information de hauteur moyenne et de densité de végétation. De manière plus générale un polygone ou un ensemble de polygones, éventuellement associé à des informations quantitatives, permet de définir les limites d'un objet géographique dans un espace à 3 dimensions. Pour estimer l'atténuation et/ou la durée de propagation radio prévisionnelles en tout point de la cellule, il est effectué une simulation de propagation de signaux radioélectriques. La propagation est modélisée en lançant fictivement, au moyen d'un calculateur d'une chaîne de production de prévisions de couverture radio, un rayon électromagnétique depuis la station, dans des directions déterminées, puis ses conditions de propagation dans l'angle solide élémentaire qu'il occupe sont calculées. Excepté la propagation en espace libre lorsque la station est en vue directe d'un terminal radio fictif qui est une propagation d'atténuation linéaire connue et de durée de propagation radio dépendante de la distance parcourue, la trajectoire des rayons rencontrent des obstacles qui l'atténuent, la dévient et la retardent de façon supplémentaire, en particulier dans les microcellules dont les stations sont souvent à une altitude inférieure à celle des toits des immeubles. Ainsi, dans une rue, un rayon peut être dévié par réflexion ou diffraction/diffusion et l'ouverture de son angle solide peut même s'en trouver accrue. La demande internationale WO-A-97/4497 divulgue un tel procédé. Cependant, cette technique bien qu'efficace présente des inconvénients majeurs du simple fait qu'elle nécessite la disponibilité de bases de données vectorielles pour procéder à la modélisation de tous les contours des bâtiments. Or, ces bases de données vectorielles sont onéreuses à produire et à maintenir et sont en outre extrêmement lourdes à gérer et à exploiter impliquant des temps de calcul prohibitifs lors de leur utilisation pour le traitement d'une application de prédiction du niveau de champ radio et/ou de la durée de propagation radio dans les réseaux de téléphonie mobile.

L'état de la technique est aussi représenté par les documents suivants :

Le document Combeau P. et Al. "Efficient 2-D ray-tracing method for narrow and wideband channel characterisation in microcellular configurations" qui montre une méthode efficace de radiorepérage 2D pour caractériser les canaux radio à bande étroite et à large bande pour un très grand nombre de récepteurs dans des configurations microcellulaires. Le méthode est basé sur un pré-calcul rapide d'un graphique de visibilité 2D exact.

Le document EP 2 230 863 A2 qui montre une méthode de planification et d'optimisation de la configuration d'un réseau d'accès radio qui comprend des stations de base et des récepteurs et utilise une technologie radio mobile qui permet et/ou impose l'utilisation de types multi-antennes sur lesdites stations de base et lesdits récepteurs. Au moyen d'un algorithme de ray tracing qui est exécuté entre lesdites positions d'émetteur et lesdites positions de récepteur en utilisant une matrice de hauteur d'encombrement 3D, une métrique scalaire est déterminée pour chaque position de récepteur qui reflète directement un gain de capacité résultant de l'application d'un type à antennes multiples au lieu d'une seule antenne auxdites positions d'émetteur et de récepteur. Cette mesure scalaire permet d'analyser de manière algorithmique avantageuse la performance relative de différents types d'antennes MIMO dans une zone de déploiement potentielle et de sélectionner un type d'antenne MIMO optimal pour un secteur de couverture particulier.

Le document Corry Y. et Al. "Three-Dimensional Urban EM Wave Propagation Model for Radio Network Planning and Optimization Over Large Areas" qui présente un nouveau modèle 3D de propagation d'ondes électromagnétiques urbaines : la méthode permet des prédictions déterministes 3D rapides dans des configurations radio urbaines et sur de grandes surfaces. Les différentes techniques permettant de l'adapter à la planification et à l'optimisation des grands réseaux sans fil sont décrites dans le document et leur évaluation souligne l'avantage de la modélisation 3D par rapport à l'approche plan vertical ou ray tracing 2D.

Le document Zhihua Lai et Al. "A new approach to solve angular dispersion of discrète ray launching for urban scénarios" qui montre comment le lancer de rayon souffre d'une dispersion angulaire qui fait que les rayons ratent des pixels lorsque la distance de l'émetteur augmente. Plusieurs solutions ont été proposées pour résoudre ce problème, telles que le traçage du faisceau ou la division des rayons, mais le présent document présente une nouvelle approche, adaptée au lancement de rayons discrets, pour éviter ce problème. Les résultats montrent que par cette approche, le lancement de rayons discrets convient à la modélisation de la propagation des ondes radioélectriques. Des accélérations significatives sont observées par rapport aux modèles traditionnels basés sur les rayons grâce à des techniques de parallélisation telles que le multithreading et le calcul distribué. Cette méthode permet d'obtenir les caractéristiques complexes des canaux dues aux trajets multiples en milieu urbain.

Exposé de l'invention

La présente invention a pour but de proposer une solution efficiente aux problèmes et inconvénients présentés par les diverses techniques de l'art antérieur et en particulier la technique exploitant des bases de données vectorielles. La présente invention vise ainsi à réduire très significativement la puissance de calcul nécessaire pour la prédiction de la couverture radio d'une cellule dans un tel réseau mobile tout en présentant la même efficacité qu'avec les techniques exploitant directement des bases de données vectorielles et en permettant, lorsque cela est désiré, d'exploiter le procédé de prédiction du niveau de champ radio et/ou de la durée de propagation radio pour les réseaux de téléphonie mobile lors d'une analyse en temps réel.

Pour cela, selon l'invention, le procédé de prédiction du niveau de champ radio et/ou de la durée de propagation radio d'un réseau de téléphonie mobile pour la couverture d'une cellule utilisant la technique de lancer de rayons et exploitant des bases de données géographiques est remarquable en ce que la base de données directement exploitée est une base matricielle composée de pixels, chaque pixel portant au moins deux informations, une information propre au type de sursol et une information propre à la hauteur du sursol, à la base matricielle est appliqué un traitement de vectorisation pour linéariser les contours d'obstacles rencontrés alors que des rayons sont fictivement lancés, les rayons selon les obstacles rencontrés étant soit, réfléchis soit, diffractés et diffusés tandis que l'atténuation globale et/ou la durée de propagation radio sont calculées, le traitement de vectorisation des contours d'obstacles étant appliqué aux bases matricielles pour linéariser les contours d'obstacles rencontrés en formant des droites dont les positions et les différents angles sont connus avec précision, ces droites décrivant précisément la position et l'orientation des façades de l'obstacle rencontré.

Ainsi, le procédé de prédiction du niveau de champ radio et/ou de la durée de propagation radio selon l'invention qui utilise un modèle de propagation à base de lancer de rayons utilisant avantageusement des données matricielles est extrêmement rapide, tout en étant précis, opérationnel et d'une importante facilité d'exploitation. Ce procédé est applicable à toutes les technologies radio, étant basé sur un concept tout à fait nouveau de modélisation de la propagation dans des environnements urbains denses avec des bases de données terrain à haute résolution.

En résumé, les principaux avantages que ce nouveau procédé offre sont les suivants. La rapidité de calcul, caractéristique essentielle du fait qu'il utilise une technique basée sur un échantillonnage matriciel et non vectoriel des angles des façades et des coins des immeubles. Une grande précision car le modèle prend en compte tous les aspects et phénomènes de la propagation radio pour délivrer des résultats avec une extrême précision. Le modèle exploité est précis pour les antennes au-dessus des toits pour lesquelles le signal provient essentiellement de la diffraction verticale, mais également pour les antennes au-dessous des toits pour lesquelles le signal provient majoritairement de la diffraction et des réflexions et diffusions horizontales. Enfin le procédé est immédiatement opérationnel et facile à utiliser car il est compatible avec toutes les technologies mobiles telles que la 2G, la 3G, le WiMax, la 4G ou LTE, le DVB, etc. et l'ensemble des fréquences utilisées. Le système mettant en œuvre le procédé peut être fourni avec des paramètres pré-calibrés qui sont intuitifs et aisément accessibles et compréhensibles. Enfin ce système supporte favorablement une interface intuitive pour l'auto-calibrage. L'auto-calibrage est une fonction qui permet de trouver d'une manière automatique les meilleurs paramètres d'un modèle de prédiction et ceci en utilisant des mesures réelles réalisées sur le terrain. Ainsi le modèle de prédiction contient une fonction qui permet d'analyser les points de mesures et trouver les meilleurs paramètres du modèle qui feront que les mesures soient le plus proche possible des prédictions, la comparaison se faisant sur l'erreur moyenne et l'écart-type par exemple.

Suivant un mode de réalisation du procédé de prédiction du niveau de champ radio et/ou de la durée de propagation radio selon l'invention, avant le lancer fictif de rayons, un prétraitement de vectorisation des contours d'obstacles est appliqué aux bases matricielles pour linéariser les contours d'obstacles rencontrés en ne prenant en compte que les objets représentant les obstacles et ainsi retrouver lesdits contours d'obstacles, ceci d'une part en identifiant les pixels ayant une hauteur non nulle comme appartenant à des obstacles et d'autre part en identifiant des segments de droites dont les positions et angles sont connus avec précision, ces segments de droite décrivant la position et l'orientation des façades desdits obstacles, ce prétraitement de vectorisation étant adapté pour entraîner le lancer de rayons une fois que les informations vectorielles propres aux types, c'est-à-dire, intérieur, façade ou coin d'obstacle et propres aux angles, c'est-à-dire, angle de façade ou angles de coin, ce pour chaque pixel, ont été extraites, pour former une matrice des types et une matrice des angles et prédire en fonction de ces matrices la réflexion, les diffraction et diffusion pour chaque rayon lancé et permettre le calcul de l'atténuation globale et/ou du temps de propagation radio.

Suivant un second mode de réalisation du procédé selon l'invention, un rayon fictif est lancé directement sur la base matricielle dans une direction d'un angle solide, couvrant l'espace dudit angle solide, son trajet étant en chaque point scruté et chaque fois que ledit rayon rencontre un obstacle et qu'un point d'impact est détecté, cette détection se faisant en comparant la hauteur du rayon avec la hauteur du point considéré, une analyse de la base de données matricielle est effectuée en temps réel pour créer des objets vectoriels adaptés au processus de lancer de rayons, une étude locale de l'environnement du point d'impact étant réalisée pour déterminer d'une part, si le point d'impact est un élément d'une façade ou d'un coin et d'autre part, l'angle de ladite façade ou les deux angles du coin de deux façades qui construisent le point, une fois l'environnement proche déterminé, le rayon continue son trajet, soit réfléchi si le point d'impact est un élément d'une façade, soit diffracté et diffusé si le point d'impact est le coin formé par deux façades.

Suivant une variante avantageuse du second mode de réalisation du procédé selon l'invention, lorsque le point d'impact est détecté au moment de lancer l'analyse de la base de données matricielle en temps réel et avant qu'une étude locale de l'environnement du point d'impact ne soit effectuée, il est vérifié que ce point d'impact n'a pas encore été analysé, si ce n'est pas le cas le rayon continue son trajet, si c'est le cas l'analyse du point d'impact est autorisée, puis une fois l'analyse exécutée l'environnement du point d'impact est mémorisé pour être réutilisé dans la suite du processus de lancer de rayons et le rayon continue son trajet.

Le procédé de prédiction du niveau de champ radio et/ou de la durée de propagation radio est également remarquable en en ce que les rayons sont lancés dans toutes les directions horizontales en utilisant un incrément réduit, chaque lancer de rayon s'effectuant de manière optimisée, c'est-à-dire qu'un rayon n'est lancé selon un angle donné que s'il est prévu que ce rayon aura un impact significatif sur la prédiction, une telle prévision étant obtenue par apprentissage lorsque des lancers de rayons précédents selon des angles voisins ont eu un impact sur la prédiction.

Ainsi, le fait de lancer des rayons dans toutes les directions horizontales avec un incrément réduit, c'est-à-dire un pas suffisamment petit et de créer cet apprentissage a pour effet avantageux d'accélérer encore et très significativement les calculs.

## Description sommaire des figures

D'autres avantages et caractéristiques ressortiront mieux de la description qui va suivre de modes préférés de mises en œuvre du procédé selon l'invention en référence aux figures annexées données à titre d'exemple non limitatif.

Les figures 1a et 1b donnent de manière schématique un exemple d'une étape d'un premier mode de réalisation du procédé selon l'invention.

Les figures 2a et 2b montrent chacune un exemple d'une seconde étape du premier mode de réalisation du procédé selon l'invention.

Les figures 3a et 3b représentent, pour un second mode de réalisation du procédé selon l'invention, la description d'une première étape de détection d'un point d'impact entre un rayon lancé et un obstacle rencontré et d'une seconde étape d'analyse dudit point d'impact.

Les figures 4a et 4b présentent une troisième étape propre à la continuation du lancer de rayon du second mode de réalisation du procédé selon l'invention.

## Meilleure manière de réaliser l'invention technique

Pour une meilleure appréhension de l'objet de l'invention suivent ci-après quelques rappels relatifs aux diffractions verticale et horizontale et aux atténuations dues auxdites diffractions.

L'estimation et le calcul relatifs à l'atténuation $L_v$ due à la diffraction verticale sur les toits sont basés sur la technique de l'extraction de radiale optimisée consistant à extraire un profil vertical le long d'une radiale, ceci en mettant à jour uniquement les données qui ont changé par rapport à une radiale voisine précédemment extraite, puis à calculer les atténuations résultantes des diffractions/diffusions sur les obstacles détectés sur le profil vertical et ainsi mettre à jour les atténuations calculées en chaque point parcouru par ladite radiale. L'atténuation $L_v$ résulte d'une diffraction de type hybride qui repose sur une combinaison du modèle dit de diffraction couteau ou « knife-edge diffraction » et du modèle dit de Walfish-Ikegami, modèle valide pour des distances relativement courtes généralement à l'intérieur de microcellules.

L'estimation et le calcul relatifs à l'atténuation $L_h$ due à la diffraction horizontale sont basés sur une technique, unique et ultrarapide dans la présente demande, de lancer de rayons ou « ray-tracing » qui repose d'une part sur une estimation des angles des obstacles, obstacles qui, en milieu urbain, sont constitués pour la plupart d'immeubles, et d'autre part à lancer des rayons dans toutes les directions horizontales avec un pas suffisamment petit, ce lancer de rayon s'effectuant de manière optimisée c'est-à-dire qu'un rayon n'est lancé selon un angle donné que si on prévoit que ce rayon aura un impact significatif sur la prédiction, une telle prévision pouvant être obtenue par la détection après apprentissage lorsque des lancers de rayons précédents selon des angles voisins ont eu un impact sur la prédiction.

En effet, le fait de lancer des rayons dans toutes les directions horizontales avec un pas suffisamment petit et de créer cet apprentissage présente l'important avantage d'accélérer très significativement les calculs.

Pour cela, dans un exemple préféré de réalisation de prévision qu'un lancer de rayon selon un angle donné aura un impact significatif sur la prédiction, ladite prévision résulte de la comparaison à un seuil du nombre de pixels pour lesquels la prédiction a été mise à jour par le rayon.

L'estimation et le calcul propres à l'atténuation $L_v$ due à la diffraction verticale n'intéressent pas la présente demande, étant connus en soi, la présente invention concerne essentiellement la diffraction horizontale et l'estimation et le calcul de sa composante $L_h$ d'atténuation.

Le procédé de l'art antérieur habituellement utilisé est ici tout d'abord succinctement évoqué, procédé qui nécessite la disponibilité et l'exploitation de bases de données vectorielles modélisant l'ensemble des contours de bâtiments. Ces bases de données vectorielles sont habituellement proposées sous forme de fichiers, par exemple de format « Shapefile » ou « Mapinfo », contenant d'une part un grand nombre de polygones, chaque polygone étant décrit précisément par les coordonnées de ses sommets successifs, et chaque polygone représentant le contour selon 2 dimensions d'un bâtiment, et d'autre part d'une information de hauteur pour chaque polygone représentant la hauteur du bâtiment correspondant. Comme précédemment précisé, ces bases de données sont volumineuses, de ce fait elles sont très lourdes à gérer et à exploiter, enfin elles requièrent d'énormes investissements pour les constituer, les produire et les maintenir étant donné que leur production correspond à un long et fastidieux processus manuel de création des polygones à partir de photographies aériennes ou satellitaires. Ces bases sont particulièrement lourdes à gérer dans le cadre d'un traitement de type lancer de rayons, car il est nécessaire de retrouver les contours qui se retrouvent sur le chemin des rayons parmi la multitude de contours disponibles dans la base de données, cette contrainte présentant des problèmes d'une grande complexité pour ce qui est de l'indexation des contours et par conséquent impliquant des traitements lourds relativement à la puissance de calcul nécessaire.

Dans ce type de bases de données, chaque élément du sursol est donc défini par un contour qui implique les informations suivantes :

- la liste des points constituant les vecteurs qui définissent le contour du bâtiment,
- un type de sursol dans le contour : immeuble, forêt, etc.,
- la hauteur du sursol.

De cette manière, la façade d'un immeuble est assimilée à une surface verticale ou respectivement un coin d'un immeuble est assimilé à deux parties de surfaces verticales dont les projections au sol correspondent à une droite ou respectivement à deux droites sécantes formant un angle et son sommet. Dans ces conditions, le rayon lancé est soit réfléchi lorsqu'il rencontre une façade donc une droite, soit diffracté et diffusé lorsqu'il rencontre un coin donc le sommet d'un angle et ceci se produisant et se calculant selon les lois de l'optique géométrique classique. Pour résumer, afin que les prédictions et les calculs soient justes il est donc essentiel que, d'une part, lorsqu'un rayon incident lancé frappe une façade, l'angle exact de la façade soit connu et d'autre part, lorsqu'un rayon incident lancé frappe le sommet de l'angle formé par deux façades, les deux angles des deux façades soient également exactement connus.

Contrairement à cela, pour assurer efficacement la couverture d'une cellule au sein d'un réseau de téléphonie mobile ou cellulaire, le procédé de prédiction du niveau de champ radio et/ou de la durée de propagation radio selon l'invention utilise également la technique de lancer de rayons en exploitant des bases de données géographiques, mais de manière nouvelle, remarquable et avantageuse, les bases de données exploitées sont directement des bases matricielles et non plus des bases vectorielles. Une base matricielle est composée de pixels et dans cette base chaque pixel porte au moins deux informations, une information propre au type de sursol (bâtiments, arbres, ponts, etc.) et une information propre à la hauteur dudit sursol. De ce fait, les contours d'obstacles ne sont pas explicites et linéaires, comme avec l'emploi d'une base vectorielle, car ils sont formés de pixels, un traitement doit alors être appliqué à la base matricielle pour linéariser les contours d'obstacles, c'est-à-dire reconstituer les contours d'obstacles selon des droites ou segments de droites dont les positions et les différents angles intéressants sont connus avec précision.

On entend ainsi par vectorisation, un procédé qui permet de reconnaître et transformer un objet représenté par un sous-ensemble de pixels d'une matrice en un objet défini vectoriellement, c'est-à-dire par un polygone représentant le contour de l'objet, le polygone étant défini exactement par les coordonnées x et y des sommets successifs du polygone.

La vectorisation permet ainsi de déduire exactement et précisément la position et les angles des côtés du polygone ainsi que la position de ses sommets par de simples lois géométriques, en d'autres termes les angles et positions des façades et des coins du bâtiment représentés par le polygone sont précisément connus.

Deux modes de réalisation principaux du procédé de prédiction du niveau de champ radio et/ou de la durée de propagation radio selon l'invention seront ci-après décrits, un premier mode de réalisation avec un traitement de vectorisation préalable et un second mode de réalisation exploitant directement les bases de données matricielles le traitement de vectorisation se faisant alors ponctuellement en temps réel pendant le lancer de rayons.

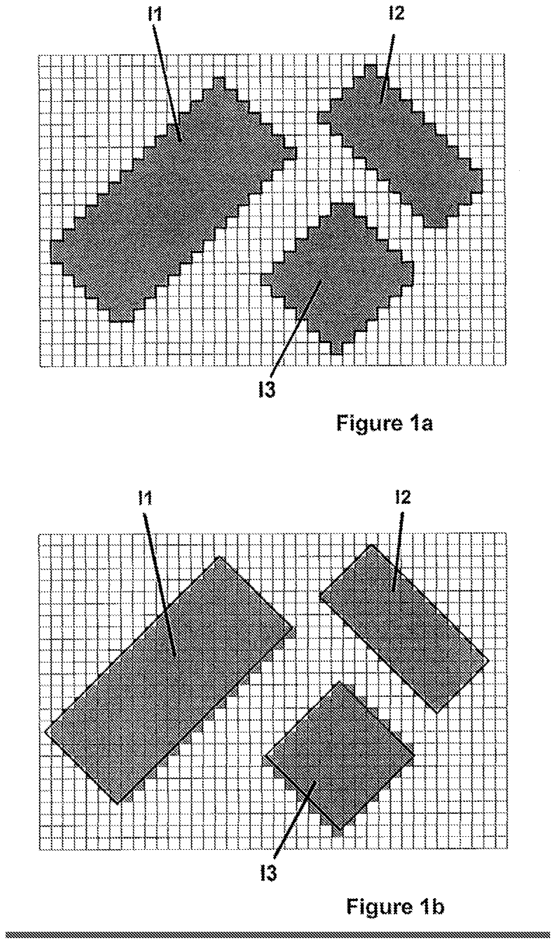

Les figures 1a et 1b donnent de manière schématique un exemple d'une étape du premier mode de réalisation du procédé avec prétraitement selon l'invention pour lequel une configuration d'obstacles simple en milieu urbain est proposée, obstacles vers lesquels les rayons incidents fictifs seront lancés.

Dans ce premier mode de réalisation, deux étapes sont décrites pour mettre en œuvre efficacement le procédé de prédiction du niveau de champ radio et/ou de la durée de propagation radio. Une première étape consiste en un prétraitement spécifique et unique de vectorisation des contours d'obstacles appliqué aux bases matricielles pour linéariser les contours d'obstacles rencontrés en ne prenant en compte que les objets représentant les obstacles et ainsi retrouver lesdits contours réels d'obstacles. Ce prétraitement est réalisé d'une manière unique car tout à fait différemment des méthodes classiques, puisqu'est acquise une connaissance du type de résultat, il est évident par exemple que les immeubles ont quasiment tous des façades verticales. De cette manière, connaissant la méthode de traitement et la précision de calcul du modèle lui-même, la méthode de prétraitement spécifique ne s'embarrasse pas de précisions inutiles. De même, ce prétraitement est basé sur l'hypothèse très commune que les bâtiments ont en grande majorité des façades planes avec projection en ligne droite, ce qui implique qu'il est aisé de retrouver l'angle d'une façade par un procédé de vectorisation par segments de droites, un tel procédé pouvant par exemple consister à trouver la ligne droite qui minimise la distance moyenne entre cette ligne droite et le centre des pixels détectés comme appartenant à cette façade, cette dernière détection étant effectuée d'une part en ne considérant que les pixels ayant un type de sursol correspondant à un bâtiment et adjacents à un pixel ne faisant pas partie d'un bâtiment, tout en excluant les pixels de façade qui dégradent la distance moyenne avec la meilleure ligne droite possible.

Comme cela a été préalablement expliqué, la figure 1a représente de manière schématique, à titre d'exemple, trois immeubles, I1, I2 et I3 d'un élément d'une base matricielle correspondant à une matrice géographique composée de points ou de pixels. Chaque point ou pixel comporte deux informations, la première relative au type de sursol, bâtiments, arbres, ponts, etc., la seconde relative à la hauteur dudit sursol. Une telle base, si les contours d'obstacles n'étaient pas linéarisés, ne pourrait être efficacement exploitée pour le lancer de rayons puisque les angles des façades ne correspondant pas à la réalité ne présentent que des angles droits relatifs aux pixels. La figure 1b montre l'élément de la base matricielle, avec les immeubles I1, I2 et I3, de la figure 1a auquel le prétraitement de vectorisation spécifique a été appliqué afin de linéariser les contours d'obstacles en recréant des segments de droite.

Ainsi et en outre, le prétraitement de vectorisation exploité est particulièrement bien adapté pour le lancer de rayons car l'algorithme de vectorisation utilisé pendant cette première étape est conçu pour prendre en compte également la future seconde étape de lancer de rayons. Les données de vectorisation ne seront pas conservées pour éviter d'avoir à traiter directement des vecteurs qui, comme cela a été précédemment expliqué, sont excessivement lourds à gérer ce qui a pour effet de considérablement ralentir le calcul. Néanmoins, à partir desdits vecteurs les deux informations vectorielles suivantes sont extraites pour chaque pixel, informations propres au type, type 1 : intérieur d'immeuble, type 2 : façade d'immeuble, type 3 : coin d'immeuble et informations propres aux angles : dans l'exemple figure 1b, angles de façades des immeubles I1, I2, I3 : 45° ou 135° ou les deux angles de coins d'immeuble : 135° et 45°, 45° et 135°. Ainsi sont obtenues une matrice des types et une matrice des angles qui vont permettre de prédire en fonction des informations qu'elles contiennent la réflexion, les diffraction et diffusion pour chaque rayon lancé et permettre le calcul de l'atténuation globale.

Une fois ce traitement appliqué à la base, dans une seconde étape, les rayons sont fictivement lancés, par conséquent non sur des bases vectorielles mais sur des bases matricielles. Deux phénomènes sont alors constatés concernant lesdits rayons qui, selon les obstacles rencontrés, sont soit réfléchis soit diffractés et diffusés alors que leurs trajets pourront alors être formellement prédits tandis que l'atténuation globale et/ou le temps de propagation radio seront précisément calculés.

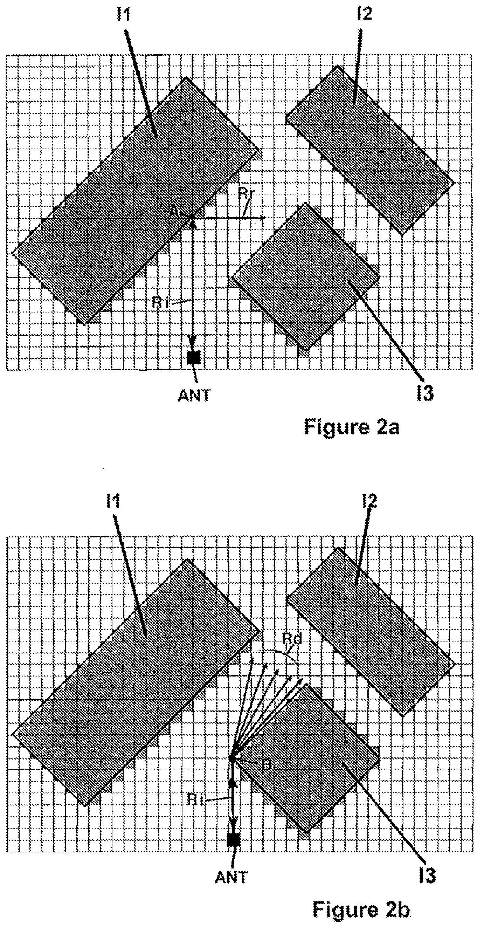

Les figures 2a et 2b montrent chacune, conservant la configuration d'environnement des figures 1a et 1b, une seconde étape du premier mode de réalisation du procédé selon l'invention, seconde étape qui correspond donc au lancer de rayons.

La figure 2a propose un exemple de réflexion d'un rayon incident Ri lancé à partir d'une antenne ANT en direction de l'immeuble I1 et qui rencontre ce dernier en un point A. Le fait d'avoir créé la matrice des types et la matrice des angles permet de connaître précisément les informations propres à ce point A. Ainsi, selon la matrice des types, ce point A est de type 2, il est situé sur une façade de l'immeuble I1. Dans cet exemple simple, la façade forme un angle de 45° avec la direction du rayon incident, information connue de la matrice des angles. De cette manière, il est facile de calculer l'angle du rayon réfléchi Rr à partir de la connaissance de l'angle du rayon incident Ri, pris comme référence 0° et de l'angle de la façade en appliquant la formule traditionnelle de l'optique géométrique classique : $\alpha r = 2 (\alpha f - \alpha i)$, dans laquelle $\alpha r$ représente l'angle de réflexion, $\alpha f$ représente l'angle de la façade et $\alpha i$ représente l'angle du rayon incident. Comme ici l'angle $\alpha i = 0°$ et l'angle $\alpha f = 45°$, on obtient aisément $\alpha r = 90°$. Ainsi sont effectués de proche en proche les calculs relatifs au phénomène de réflexion.

La figure 2b propose un exemple de diffraction/diffusion d'un rayon incident Ri lancé à partir de l'antenne ANT en direction de l'immeuble I3 et qui rencontre ce dernier en un point B. La matrice des types et la matrice des angles permettent de connaître les informations propres à ce point B. Ainsi, selon la matrice des types, ce point B est de type 3, il correspond à un coin de l'immeuble I3. Dans cet exemple simple, le coin est formé par deux angles, un premier angle $\beta 1 = 135°$ et un second angle $\beta 2 = 45°$ relativement à la direction du rayon incident Ri, informations connues de la matrice des angles. Le calcul des directions des rayons diffractés/diffusés Rd est réalisé en appliquant les lois connues de l'optique géométrique classique, ce calcul dépend donc ici des deux angles $\beta 1$ et $\beta 2$ qui définissent au point B le coin de l'immeuble I3, ces deux angles étant précisément connus de la matrice des angles.

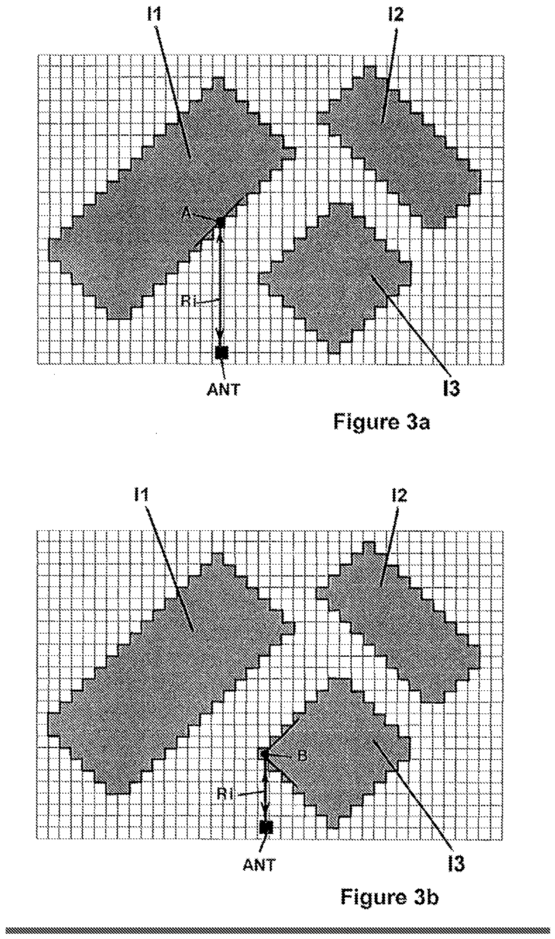

Suit la description d'un second mode de réalisation du procédé selon l'invention se dispensant également de l'utilisation de lourdes bases vectorielles. Les figures 3a et 3b donnent de manière schématique un exemple du second mode de réalisation exploitant directement des bases de données matricielles pendant la totalité du déroulement du processus de lancer de rayons, ceci pour mettre en œuvre en temps réel le procédé selon l'invention. La configuration d'obstacles simple en milieu urbain proposée est identique à celle déjà proposée avec le premier mode de réalisation, obstacles vers lesquels les rayons incidents fictifs sont lancés.

Ainsi, les rayons fictifs sont lancés directement sur la représentation de la base matricielle, chacun dans une direction d'un angle solide, couvrant l'espace dudit angle solide. L'algorithme du lancer de rayons sur la base matricielle ici utilisé consiste à scruter son trajet en chaque point et chaque fois que ledit rayon rencontre un obstacle, cette détection se faisant en comparant le hauteur du rayon avec la hauteur de l'obstacle au point considéré, une analyse ponctuelle de la base de données matricielle est alors effectuée en temps réel pour créer des objets vectoriels adaptés au processus de lancer de rayons, une étude locale de l'environnement du point d'impact étant pour cela réalisée, puis le processus de lancer de rayons est poursuivi, ceci de proche en proche.

De manière remarquable trois étapes sont parcourues durant le processus de lancer de rayons pendant lesquelles les bases matricielles sont directement exploitées. Une première étape est ainsi constituée par la détection du point d'impact entre le rayon incident lancé et un obstacle rencontré, une seconde étape consiste en l'analyse du point d'impact pour créer des objets vectoriels adaptés au processus de lancer de rayons alors qu'une troisième étape représente la continuation du lancer de rayon.

Les figures 3a et 3b vont permettre de suivre le déroulement de la première étape de détection d'un point d'impact et de la seconde étape d'analyse dudit point d'impact, la figure 3a concernant l'exemple d'un point d'impact sur la façade d'un immeuble alors que la figure 3b intéresse un point d'impact sur le coin d'un immeuble.

Dans une première étape, chaque point du rayon incident lancé Ri à partir de l'antenne ANT est suivi pour détecter si ce rayon rencontre un immeuble I1, I2, I3, et lorsque c'est le cas, le point d'impact est ainsi détecté et déterminé. Deux cas se présentent selon que le point est situé sur la façade d'un immeuble I1, point A dans l'exemple de la figure 3a ou sur le coin d'un immeuble I3, point B, dans l'exemple de la figure 3b. Une fois le point d'impact détecté et déterminé lors de la première étape, commence la seconde étape dédiée à la création d'objets vectoriels adaptés au processus de lancer de rayons au cours de laquelle une analyse ponctuelle de l'environnement proche du point A ou du point B est réalisée afin d'une part de spécifier si le point A ou respectivement le point B est un élément d'une façade ou respectivement d'un coin formé par deux façades et d'autre part de préciser l'angle de la façade ou bien les deux angles du coin sur lequel est localisé le point A ou bien le point B. Sur l'exemple de la figure 3a, le point A est un élément d'une façade de l'immeuble I1 dont l'angle avec le rayon incident Ri est, dans cet exemple, égal à 45°. Sur la figure 3b, le point B est un élément d'un coin formé par deux façades dont les angles avec le rayon incident Ri sont, dans cet exemple, respectivement de 135° et 45°.

Un algorithme de vectorisation ou de linéarisation locale est pour cela mis en œuvre, par exemple l'algorithme décrit précédemment utilisant l'adaptation de lignes droites aux pixels de façade, lequel algorithme est parfaitement adapté au lancer de rayons étant conçu pour prendre en compte la troisième étape subséquente de continuation de lancer de rayons.

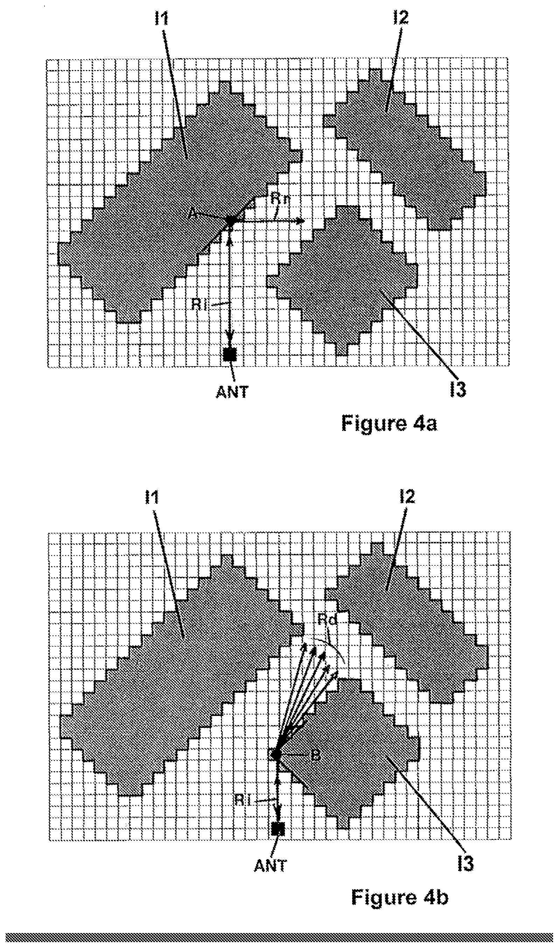

Sur les figures 4a et 4b est représentée la troisième étape propre à la continuation du lancer de rayon. Ainsi, l'environnement proche du point A ou du point B étant parfaitement et précisément déterminé lors du déroulement des première et seconde étapes, à la troisième étape le lancer du rayon peut être poursuivi selon les méthodes normales.

Sur la figure 4a est proposé un exemple de réflexion d'un rayon incident Ri lancé à partir d'une antenne ANT en direction de l'immeuble I1 et qui rencontre ce dernier en un point A. La seconde étape a permis de connaître précisément les informations propres à ce point A. Ainsi, il a été déterminé que le point A est situé sur une façade de l'immeuble I1 et que, dans cet exemple simple, la façade forme un angle de 45° avec la direction du rayon incident. De la même manière qu'avec le premier mode de réalisation, il est facile de calculer l'angle du rayon réfléchi Rr à partir de la connaissance de l'angle du rayon incident Ri, pris comme référence 0° et de l'angle de la façade en appliquant la formule traditionnelle de l'optique géométrique classique : $\alpha r = 2\,(\alpha f - \alpha i)$, dans laquelle $\alpha r$ représente l'angle de réflexion, $\alpha f$ représente l'angle de la façade et $\alpha i$ représente l'angle du rayon incident. Comme ici l'angle $\alpha i = 0°$ et l'angle $\alpha f = 45°$, on obtient aisément $\alpha r = 90°$. Ainsi, le lancer de rayon peut être poursuivi et de proche en proche sont effectués les calculs d'atténuation relatifs au phénomène de réflexion.

La figure 4b propose un exemple de diffraction/diffusion d'un rayon incident Ri lancé à partir de l'antenne ANT en direction de l'immeuble I3 et qui rencontre ce dernier en un point B. La seconde étape a permis de connaître précisément les informations propres à ce point B. Ainsi, il a été déterminé que le point B correspond à un coin de l'immeuble I3. Dans cet exemple simple, le coin est formé par deux angles, un premier angle $\beta 1 = 135°$ et un second angle $\beta 2 = 45°$ relativement à la direction du rayon incident Ri. Le calcul des directions des rayons diffractés/diffusés Rd est réalisé en appliquant les lois connues de l'optique géométrique classique, ce calcul dépend également ici des deux angles $\beta 1$ et $\beta 2$ qui définissent au point B le coin de l'immeuble I3, ces deux angles étant précisément connus, le lancer de rayon peut être poursuivi.

Une variante avantageuse du second mode de réalisation du procédé selon l'invention est à présent décrite. Cette variante est en fait une extension directe du second mode de réalisation mais qui combine les avantages des deux modes de réalisation précédemment exposés. Cette extension vient s'insérer entre la première et la troisième étape du second mode de réalisation.

Ainsi, lorsque le point d'impact est détecté, au moment de lancer l'analyse de la base de données matricielle en temps réel et avant qu'une étude locale de l'environnement du point d'impact ne soit effectuée, il est vérifié que ce point d'impact n'a pas encore été analysé, si ce n'est pas le cas et donc que l'environnement du point d'impact a déjà été analysé le rayon continue son trajet, si par contre c'est le cas, l'analyse du point d'impact est autorisée, une fois l'analyse exécutée l'environnement du point d'impact est mémorisé pour être réutilisé dans la suite du processus de lancer de rayons et le rayon continue son trajet.

L'étude locale de l'environnement du point d'impact permet de déterminer d'une part, si le point d'impact est un élément d'une façade ou d'un coin et d'autre part, l'angle de ladite façade ou les deux angles du coin de deux façades qui construisent le point. Cette étude locale est effectuée par un procédé de détection de façades et de coins consistant à identifier un ou deux segments de droites dont les positions et angles sont connus avec précision, ce ou ces segments de droites décrivant précisément la position et l'orientation de la façade si le point d'impact est un élément d'une façade, et la position et l'orientation des deux façades formant le coin si le point d'impact est un élément d'un coin. Le point d'impact est finalement déterminé comme élément d'une façade si un seul segment de droite ou bien deux segments de droites avec une orientation proche ont été identifiés précédemment, dans le cas contraire le point d'impact est un élément d'un coin, et l'angle de la façade ou les angles des façades formant le coin sont obtenus par l'orientation du ou des deux segments de droite identifiés.

Plus précisément, l'identification du ou des deux segments de droites dont les positions et angles sont connus avec précision est effectuée en minimisant la distance entre ce ou ces deux segments de droite et l'ensemble des pixels détectés comme appartenant à la façade ou aux deux façades formant le coin, cette dernière détection se faisant d'une part en sélectionnant initialement le pixel du point d'impact, puis en sélectionnant itérativement tout pixel adjacent à un pixel déjà sélectionné qui est caractérisé d'une part par un type de sursol identique au point d'impact et lui-même adjacent à un pixel ayant un type de sursol différent du point d'impact, et d'autre part qui ne dégrade pas la distance entre le ou les deux meilleurs segments de droite avec l'ensemble des points déjà sélectionnés.

En conséquence, l'ensemble des étapes du second mode de réalisation reste quasiment identique, la seule modification étant l'utile mise en mémoire des résultats des calculs propres à l'environnement proche d'un point d'impact déjà analysé et donc des informations concernant les types d'obstacles et les angles formés par lesdits obstacles rencontrés. Les données matricielles sont alors linéarisées de proche en proche.

De cette façon, grâce à cette variante il est permis de sauvegarder sous forme de données matricielles les données vectorielles calculées dans l'environnement proche du point d'impact, c'est-à-dire autour dudit point d'impact, afin que ces dernières, une fois sauvegardées, puissent être réutilisées subséquemment lorsqu'un autre rayon lancé vient rencontrer l'environnement proche du point d'impact déjà analysé. Ainsi, la base initiale d'objets contenant des informations vectorielles est avantageusement enrichie au fur et à mesure de l'exécution des calculs de lancer de rayons, ce qui a pour principal avantage de présenter un gain significatif en rapidité du procédé puisque ne sont pas ré-exécutés les calculs déjà effectués autour d'un point d'impact lors d'un lancer de rayon précédent.

En effet selon cette variante, chaque fois qu'un rayon est lancé vers ou à proximité d'un point d'impact pour lequel des calculs ont déjà été effectués, la seconde étape d'analyse de l'environnement proche d'un point d'impact du second mode de réalisation du procédé n'est pas mise en œuvre, ce qui revient à appliquer à l'identique le procédé selon le premier mode de réalisation avec prétraitement.

Pour rappel, le calcul de l'atténuation globale $L_h$ dans le cas de phénomène de diffraction horizontale basée sur le lancer de rayons est traditionnellement effectué en utilisant la formule suivante :

$$L_h = G_{ant} + \sum_{k=1}^{m} L_{los-k} + \sum_{k=1}^{m-1} Diff_k + \sum_{k=1}^{m-1} Refl_k$$

formule dans laquelle :

- $G_{ant}$ représente le gain d'antenne,
- n est le nombre des différents segments de propagation en espace libre entre l'émetteur et le récepteur, chaque segment étant créé par une diffraction ou une réflexion,
- $L_{los-k}$ est l'atténuation en espace libre du segment d'indice k,
- $Diff_k$ est la perte due à la diffraction entre le segment d'indice k et le segment d'indice k+1,
- $Refl_k$ est la perte due à la réflexion entre le segment d'indice k et le segment d'indice k+1.

Par ailleurs la durée de propagation radio est directement obtenue par le calcul du ratio distance totale parcourue par le rayon sur la vitesse de propagation, correspondant donc à la somme des segments de propagation en espace libre entre l'émetteur et le récepteur, chaque segment étant créé par une diffraction ou une réflexion.

Le profil de canal radio est, quant à lui, totalement décrit par l'ensemble des couplets [atténuation globale, temps de propagation] de chaque lancer de rayon du transmetteur qui atteint un récepteur donné, ce profil de canal radio donnant ainsi une mesure de la dispersion du signal radio causé par les multi-trajets.

Egalement et avantageusement, selon une mise en œuvre préférée du procédé de prédiction du niveau de champ radio et/ou de la durée de propagation, lorsque le point d'impact d'un rayon est détecté, le couplet position du point d'impact et angle d'incidence du rayon sur le point d'impact peut être mémorisé dans une base dite de couplets, le rayon poursuivant alors son trajet par réflexion, ou diffraction/diffusion suite au point d'impact uniquement si le couplet point d'impact et angle d'incidence du rayon est significativement différent des couplets mémorisés lors des lancers de rayons effectués précédemment.

Pour mémoire, le procédé selon l'invention s'applique avantageusement à la prédiction du niveau de champ radio et/ou de la durée de propagation radio d'un réseau de téléphonie mobile, mais il pourrait tout aussi bien s'appliquer, simplement par analogie, à un procédé de simulation du niveau de champ électromagnétique basé sur un processus de lancer de rayons sur des données matricielles ou encore à un procédé de simulation du niveau de champ sonore également basé sur un processus de lancer de rayons sur des données matricielles.

Diverses modifications à la portée de l'homme de métier sont bien entendu possibles sans pour autant sortir du cadre de l'invention telles que présentées dans les revendications en annexe.

**Revendications**

1. Procédé de prédiction du niveau de champ radio et/ou de la durée de propagation radio d'un réseau de téléphonie mobile pour la couverture d'une cellule utilisant la technique de lancer de rayons et exploitant des bases de données géographiques **caractérisé en ce que** la base de données directement exploitée est une base matricielle composée de pixels, chaque pixel portant au moins deux informations, une information propre au type de sursol et une information propre à la hauteur du sursol, à la base matricielle est appliqué un traitement de vectorisation pour linéariser les contours d'obstacles (I1, I2, I3) rencontrés alors que des rayons (Ri) sont fictivement lancés, les rayons selon les obstacles rencontrés étant soit réfléchis (Rr) soit diffractés et diffusés (Rd), tandis que l'atténuation globale et/ou la durée de propagation radio sont calculées, le traitement de vectorisation des contours d'obstacles (I1, I2, I3) étant appliqué aux bases matricielles pour linéariser les contours d'obstacles (I1, I2, I3) rencontrés en formant des droites dont les positions et les différents angles sont connus avec précision, ces droites décrivant précisément la position et l'orientation des façades de l'obstacle (I1, I2, I3) rencontré.

2. Procédé de prédiction du niveau de champ radio et/ou de la durée de propagation radio selon la revendication 1 **caractérisé en ce que**, avant le lancer fictif de rayons (Ri), un prétraitement de vectorisation des contours d'obstacles (I1, I2, I3) est appliqué aux bases matricielles pour linéariser les contours d'obstacles (I1, I2, I3) rencontrés en ne prenant en compte que les objets représentant les obstacles et ainsi retrouver lesdits contours d'obstacles (I1, I32, I3), ceci d'une part en identifiant les pixels ayant une hauteur non nulle comme appartenant à des obstacles et d'autre part en identifiant des segments de droites dont les positions et angles sont connus avec précision, ces segments de droite décrivant précisément la position et l'orientation des façades desdits obstacles (I1, I2, I3), ce prétraitement de vectorisation étant adapté pour entraîner le lancer de rayons une fois que les informations vectorielles propres aux types, c'est-à-dire, intérieur, façade ou coin d'obstacle et propres aux angles, c'est-à-dire, angle de façade ou angles de coin, ce pour chaque pixel, ont été extraites, pour former une matrice des types et une matrice des angles et prédire en fonction de ces matrices la réflexion, les diffraction et diffusion pour chaque rayon (Ri) lancé et permettre le calcul de l'atténuation globale et/ou du temps de propagation radio.

3. Procédé de prédiction du niveau de champ radio et/ou de la durée de propagation radio selon la revendication 1 **caractérisé en ce que**, un rayon fictif (Ri) est lancé directement sur la base matricielle dans une direction d'un angle solide, couvrant l'espace dudit angle solide, son trajet étant en chaque point scruté et chaque fois que ledit rayon rencontre un obstacle (I1, I2, I3) et qu'un point d'impact (A, B) est détecté, cette détection se faisant en comparant la hauteur du rayon avec la hauteur du point considéré, une analyse de la base de données matricielle est effectuée en temps réel pour créer des objets vectoriels adaptés au processus de lancer de rayons, une étude locale de l'environnement du point d'impact (A, B) étant réalisée pour déterminer d'une part, si le point d'impact (A, B) est un élément d'une façade ou d'un coin et d'autre part, l'angle de ladite façade ou les deux angles du coin de deux façades qui construisent le point, une fois l'environnement proche déterminé, le rayon (Ri) continue son trajet, soit réfléchi (Rr) si le point d'impact est un élément d'une façade, soit diffracté et diffusé (Rd) si le point d'impact (A, B) est le coin formé par deux façades.

4. Procédé de prédiction du niveau de champ radio et/ou de la durée de propagation radio selon la revendication 3 **caractérisé en ce que**, lorsque le point d'impact (A, B) est détecté au moment de lancer l'analyse de la base de données matricielle en temps réel et avant qu'une étude locale de l'environnement du point d'impact (A, B) ne soit effectuée, il est vérifié que ce point d'impact (A, B) n'a pas encore été analysé, si ce n'est pas le cas le rayon (Rr, Rd) continue son trajet, si c'est le cas l'analyse du point d'impact (A, B) est autorisée, puis une fois l'analyse exécutée l'environnement du point d'impact (A, B) est mémorisé pour être réutilisé dans la suite du processus de lancer de rayons et le rayon (Rr, Rd) continue son trajet.

5. Procédé de prédiction du niveau de champ radio et/ou de la durée de propagation radio selon la revendication 4 **caractérisé en ce que** l'étude locale de l'environnement du point d'impact (A, B) pour déterminer d'une part, si le point d'impact (A, B) est un élément d'une façade ou d'un coin et d'autre part, l'angle de ladite façade ou les deux angles du coin de deux façades qui construisent le point, est effectuée par un procédé de détection de façades et de coins consistant à identifier un ou deux segments de droites dont les positions et angles sont connus avec précision, ce ou ces segments de droites décrivant précisément la position et l'orientation de la façade si le point d'impact (A, B) est un élément d'une façade, et la position et l'orientation des deux façades formant le coin si le point d'impact (A, B) est un élément d'un coin, le point d'impact (A, B) étant finalement déterminé comme élément d'une façade si un seul segment de droite ou bien deux segments de droites avec une orientation proche ont été identifiés précédemment, dans le cas contraire le point d'impact (A, B) est un élément d'un coin, et l'angle de la façade ou les angles des façades formant le coin sont obtenus par l'orientation du ou des deux segments de droite identifiés.

6. Procédé de prédiction du niveau de champ radio et/ou de la durée de propagation radio selon la revendication 5 **caractérisé en ce que** l'identification du ou des deux segments de droites dont les positions et angles sont connus avec précision est effectuée en minimisant la distance entre ce ou ces deux segments de droite et l'ensemble des pixels détectés comme appartenant à la façade ou aux deux façades formant le coin, cette dernière détection se faisant d'une part en sélectionnant initialement le pixel du point d'impact (A, B), puis en sélectionnant itérativement tout pixel adjacent à un pixel déjà sélectionné qui est caractérisé d'une part par un type de sursol identique au point d'impact et lui-même adjacent à un pixel ayant un type de sursol différent du point d'impact (A, B), et d'autre part qui ne dégrade pas la distance entre le ou les deux meilleurs segments de droite avec l'ensemble des points déjà sélectionnés.

7. Procédé de prédiction du niveau de champ radio et/ou de la durée de propagation radio selon l'une des revendications précédentes **caractérisé en ce que** les rayons sont lancés dans toutes les directions horizontales en utilisant un incrément réduit, chaque lancer de rayon (Ri) s'effectuant de manière optimisée, c'est-à-dire qu'un rayon n'est lancé selon un angle donné que s'il est prévu que ce rayon aura un impact significatif sur la prédiction, une telle prévision étant obtenue par apprentissage lorsque des lancers de rayons (Ri) précédents selon des angles voisins ont eu un impact significatif sur la prédiction.

8. Procédé de prédiction du niveau de champ radio et/ou de la durée de propagation radio selon la revendication 7 **caractérisé en ce que** la prévision qu'un lancer de rayon (Ri) selon un angle donné aura un impact significatif sur la prédiction résulte de la comparaison à un seuil du nombre de pixels pour lesquels la prédiction a été mise à jour par le rayon (Ri).

9. Procédé de prédiction du niveau de champ radio et/ou de la durée de propagation radio selon l'une des revendications précédentes **caractérisé en ce que**, lorsque le point d'impact (A, B) d'un rayon (Ri) est détecté, le couplet position du point d'impact et angle d'incidence du rayon sur le point d'impact est mémorisé dans une base de couplets et le rayon Ri) poursuit son trajet par réflexion (Rr), ou diffraction/diffusion (Rd) suite au point d'impact (A, B) uniquement si le couplet point d'impact et angle d'incidence du rayon est significativement différent des couplets mémorisés lors des lancers de rayons (Ri) effectués précédemment.

**Patentansprüche**

1. Verfahren zum Vorhersagen des Funkfeldpegels und/oder der Funkausbreitungszeit eines Mobilfunknetzes für die Abdeckung einer Zelle unter Verwendung der Strahlverfolgungstechnik und der Nutzung geographischer Datenbanken, **dadurch gekennzeichnet, dass** die direkt ausgenutzte Datenbank eine Matrixdatenbank ist, die aus Pixeln besteht, wobei jedes Pixel mindestens zwei Informationen, Informationen, die für die Art des Oberflächenrelief spezifisch sind, und Informationen, die für die Höhe des Oberflächenreliefs spezifisch sind, enthält, wobei auf die Matrixbasis eine Vektorisierungsbehandlung zur Linearisierung der Konturen von getroffenen Hindernissen (I1, I2, I3) angewendet wird, die beim fiktiven Start von Strahlen (Ri) auftreten, wobei die Strahlen entsprechend den getroffenen Hindernissen entweder reflektiert (Rr) oder gebeugt und diffus (Rd) werden, während die gesamte Dämpfungs- und/oder Funklaufzeit berechnet wird, die Vektorisierungsverarbeitung der Konturen von Hindernissen (I1, I2, I3), die auf die Rasterbasen angewendet werden, um die Konturen von Hindernissen (I1, I2, I3) zu linearisieren, die durch die Bildung von Linien entstehen, deren Positionen und unterschiedliche Winkel genau bekannt sind, wobei diese Linien die Position und Ausrichtung der Fassaden des getroffenen Hindernisses (I1, I2, I3) genau beschreiben.

2. Verfahren zur Vorhersage des Funkfeldpegels und/oder der Funklaufzeit nach Anspruch 1, **dadurch gekennzeichnet, dass** vor dem fiktiven Werfen von Strahlen (Ri) eine Vektorisierungsvorbehandlung der Konturen von getroffenen Hindernissen (I1, I2, I3) auf die Matrixbasen angewendet wird, um die Konturen von Hindernissen (I1, I2, I2) zu linearisieren, die dadurch erreicht wird, dass nur die Objekte, die die Hindernisse darstellen, berücksichtigt werden und somit die Konturen von Hindernissen (I1, I32, I3) gefunden werden, einerseits durch Identifizieren von Pixeln mit einer Höhe ungleich Null als zu Hindernissen gehörend und andererseits durch Identifizieren von Segmenten von Linien, deren Positionen und Winkel genau bekannt sind, wobei diese Liniensegmente die Position und Ausrichtung der Fassaden der Hindernisse (I1, I2, I3) genau beschreiben, wobei diese Vektorisierungsvorbehandlung angepasst ist, um ein Strahlverfolgen zu bewirken, sobald die für die Typen, d.h. innerhalb, in der Fassade oder in einer Ecke des Hindernisses, spezifischen Vektorinformationen und die für die Winkel spezifisch sind, d.h. Fassadenwinkel oder Eckwinkel, die für jedes Pixel extrahiert wurden, um eine Typmatrix und eine Winkelmatrix zu bilden und gemäß diesen Matrizen die Reflexion, Beugung und Streuung für jeden geworfenen Strahl (Ri) vorherzusagen und die Berechnung der globalen Dämpfung und/oder der Funklaufzeit zu ermöglichen.

3. Verfahren zum Vorhersagen des Funkfeldpegels und/oder der Funklaufzeit nach Anspruch 1, **dadurch gekennzeichnet, dass** ein fiktiver Strahl (Ri) direkt auf die Matrixbasis in Richtung eines Raumwinkels gerichtet wird, der den Raum des Raumwinkels abdeckt, wobei sein Weg an jedem Punkt abgetastet wird und jedes Mal, wenn der Strahl auf ein Hindernis (I1, I2, I3) trifft und wenn ein Auftreffpunkt (A, B) erfasst wird, diese Erkennung durch Vergleichen der Höhe des Strahls mit der Höhe des betrachteten Punktes erfolgt, eine Analyse der Matrixdatenbank in Echtzeit durchgeführt wird, um Vektorobjekte zu erzeugen, die an den Strahlverfolgungsprozess angepasst sind, eine lokale Umweltstudie über den Auftreffpunkt (A, B), die durchgeführt wird, um einerseits zu bestimmen, ob der Auftreffpunkt (A, B) ein Element einer Fassade oder einer Ecke ist, und andererseits den Winkel der Fassade oder die beiden Eckwinkel von zwei Fassaden, die den Punkt bilden, sobald die nahe Umgebung bestimmt wurde, setzt der Strahl (Ri) seinen Weg fort, entweder reflektiert (Rr), wenn der Auftreffpunkt ein Element einer Fassade ist, oder gebeugt und diffus (Rd), wenn der Auftreffpunkt (A, B) die von zwei Fassaden gebildete Ecke ist.

4. Verfahren zur Vorhersage des Funkfeldpegels und/oder der Funkausbreitungszeit nach Anspruch 3, **dadurch gekennzeichnet, dass**, wenn der Auftreffpunkt (A, B) beim Start der Analyse der Matrixdatenbank in Echtzeit und vor der Durchführung einer lokalen Umweltstudie des Auftreffpunktes (A, B) erfasst wird, überprüft wird, dass dieser Auftreffpunkt (A, B) noch nicht analysiert wurde, wenn dies nicht der Fall ist, setzt der Strahl (Rr, Rd) seinen Weg fort, wenn dies der Fall ist, ist die Analyse des Auftreffpunktes (A, B) erlaubt, dann wird nach Durchführung der Analyse die Umgebung des Auftreffpunktes (A, B) zur Wiederverwendung im weiteren Verlauf des Strahlverfolgungsprozesses gespeichert und der Strahl (Rr, Rd) setzt seinen Weg fort.

5. Verfahren zum Vorhersagen der Funkfeldstärke und/oder der Funkausbreitungszeit nach Anspruch 4, **dadurch gekennzeichnet, dass** die lokale Umweltstudie des Auftreffpunktes (A, B) zum Bestimmen einerseits, ob der Auftreffpunkt (A, B) ein Element einer Fassade oder einer Ecke ist, und andererseits, die Ecke der Fassade oder die beiden Ecken der Ecke von zwei Fassaden, die den Punkt bilden, durch ein Fassaden- und Eckerkennungsverfahren durchgeführt wird, das darin besteht, ein oder zwei Segmente von Geraden zu identifizieren, deren Positionen und Winkel genau bekannt sind, dieses oder diese geradlinigen Segmente, die die Position und Ausrichtung der Fassade genau beschreiben, wenn der Auftreffpunkt (A, B) ein Element einer Fassade ist, und die Position und Ausrichtung der beiden Fassaden, die die Ecke bilden, wenn der Auftreffpunkt (A, B) ein Element einer Ecke ist, der Auftreffpunkt (A, B) endgültig als Element einer Fassade bestimmt wird, wenn zuvor nur ein Liniensegment oder zwei Liniensegmente mit enger Ausrichtung identifiziert wurden, andernfalls ist der Auftreffpunkt (A, B) ein Element einer Ecke, und der Winkel der Fassade oder die Winkel der die Ecke bildenden Fassaden werden durch die Ausrichtung der einen oder zwei identifizierten Liniensegmente erhalten.

6. Verfahren zur Vorhersage des Funkfeldpegels und/oder der Funklaufzeit nach Anspruch 5, **dadurch gekennzeichnet, dass** die Identifizierung des einen oder der beiden Liniensegmente, deren Positionen und Winkel genau bekannt sind, durch Minimierung des Abstands zwischen diesem oder diesen beiden Liniensegmenten und allen als zur Fassade oder zu den beiden die Ecke bildenden Fassaden gehörenden Pixeln erfolgt, wobei diese letzte Erkennung einerseits durch anfängliches Auswählen des Pixels des Auftreffpunkt (A, B) und andererseits durch iteratives Auswählen jedes Pixels, das an ein bereits ausgewähltes Pixel angrenzt, das einerseits durch eine Art von Oberflächenrelief gekennzeichnet ist, das mit dem Auftreffpunkt identisch ist und selbst an ein Pixel angrenzt, das eine Art von Oberflächenrelief aufweist, das sich von dem Auftreffpunkt (A, B) unterscheidet, und andererseits durch das nicht verschlechterte Abstandsmaß zwischen den besten beiden Segmenten auf der rechten Seite mit allen bereits ausgewählten Punkten.

7. Verfahren zum Vorhersagen des Funkfeldpegels und/oder der Funkausbreitungszeit nach einem der vorstehenden Ansprüche, **dadurch gekennzeichnet, dass** die Strahlen in alle horizontalen Richtungen unter Verwendung eines reduzierten Inkrements geworfen werden, wobei jeder Wurf eines Strahls (Ri) optimiert ausgeführt wird, d.h. ein Strahl wird nur dann unter einem bestimmten Winkel geworfen, wenn vorhergesagt wird, dass dieser Strahl einen wesentlichen Einfluss auf die Vorhersage haben wird, wobei eine solche Vorhersage durch Lernen erhalten wird, wenn vorherige Würfe von Strahlen (Ri) unter benachbarten Winkeln einen wesentlichen Einfluss auf die Vorhersage hatten.

8. Verfahren zum Vorhersagen des Funkfeldpegels und/oder der Funkausbreitungszeit nach Anspruch 7, **dadurch gekennzeichnet, dass** die Vorhersage, dass ein Wurf eines Strahls (Ri) in einem gegebenen Winkel einen signifikanten Einfluss auf die Vorhersage haben wird, aus dem Vergleichen der Anzahl der Pixel, für die die Vorhersage durch den Strahl (Ri) aktualisiert wurde, mit einem Schwellenwert resultiert.

9. Verfahren zum Vorhersagen des Funkfeldpegels und/oder der Funkausbreitungszeit nach einem der vorstehenden Ansprüche, **dadurch gekennzeichnet, dass**, wenn der Auftreffpunkt (A, B) eines Strahls (Ri) erfasst wird, die Couplet-Position des Auftreffpunktes und der Einfallswinkel des Strahls auf den Auftreffpunkt in einer Basis von Couplets gespeichert wird und der Strahl Ri) seinen Weg durch Reflexion (Rr) fortsetzt, oder Beugung/Diffusion (Rd) nach dem Auftreffpunkt (A, B) nur dann, wenn sich der Auftreffpunkt und der Einfallswinkel des Strahls signifikant von den bei den vorherigen Würfen von Strahlen (Ri) gespeicherten Couplets unterscheidet.

## Claims

1. Method for predicting the radio field level and/or radio propagation time of a mobile telephone network for the coverage of a cell using the ray tracing technique and exploiting geographical databases, **characterized in that** the database directly exploited is a matrix database composed of pixels, each pixel carrying at least two pieces of information, information specific to the type of surface relief and information specific to the height of the surface relief, to the matrix base is applied a vectorization treatment to linearize the contours of obstacles (I1, I2, I3) encountered while rays (Ri) are fictitiously launched, the rays according to the obstacles encountered being either reflected (Rr) or diffracted and scattered (Rd), while the overall attenuation and/or radio propagation time are calculated, the vectorization processing of the contours of obstacles (I1, I2, I3) being applied to the matrix bases to linearize the contours of obstacles (I1, I2, I3) encountered by forming lines whose positions and different angles are precisely known, these lines accurately describing the position and orientation of the facades of the obstacle (I1, I2, I3) encountered.

2. Method for predicting the radio field level and/or radio propagation time according to claim 1, **characterized in that**, before the fictitious tracing of rays (Ri), a vectorization pre-treatment of the contours of obstacles (I1, I2, I3) is applied to the matrix bases to linearize the contours of obstacles (II, I2, I3) encountered by taking into account only the objects representing the obstacles and thus finding said contours of obstacles (I1, I32, I3), on the one hand by identifying pixels having a non-zero height as belonging to obstacles and on the other hand by identifying segments of lines whose positions and angles are known with precision, these line segments accurately describing the position and orientation of the facades of said obstacles (I1, I2, I3), this vectorization pre-treatment being adapted to cause ray tracing once the vector information specific to the types, i.e. inside, facade or corner of the obstacle and specific to the angles, i.e., façade angle or corner angles, this for each pixel, were extracted, to form a type matrix and an angle matrix and predict according to these matrices the reflection, diffraction and scattering for each launched ray (Ri) and allow the calculation of the global attenuation and/or the radio propagation time.

3. Method for predicting the radio field level and/or radio propagation time according to claim 1, **characterized in that** a dummy ray (Ri) is launched directly onto the matrix base in a direction of a solid angle, covering the space of said solid angle, its path being at each point scanned and each time said ray meets an obstacle (I1, I2, I3) and that an impact point (A, B) is detected, this detection being done by comparing the height of the ray with the height of the considered point, an analysis of the matrix database is performed in real time to create vector objects adapted to the ray tracing process, a local environmental study of the impact point (A, B) being carried out to determine, on the one hand, whether the impact point (A, B) is an element of a facade or corner and, on the other hand, the angle of said facade or the two corner angles of two facades that construct the point, once the near environment has been determined, the ray (Ri) continues its path, either reflected (Rr) if the impact point is an element of a facade, or diffracted and diffused (Rd) if the impact point (A, B) is the corner formed by two facades.

4. Method for predicting the radio field level and/or radio propagation time according to claim 3, **characterized in that**, when the impact point (A, B) is detected when starting the analysis of the matrix database in real time and before a local environmental study of the impact point (A, B) is carried out, it is verified that this impact point (A, B) has not yet been analysed, if this is not the case the ray (Rr, Rd) continues its path, if this is the case the analysis of the impact point (A, B) is allowed, then once the analysis is performed the environment of the impact point (A, B) is stored for reuse in the rest of the ray tracing process and the ray (Rr, Rd) continues its path.

5. Method for predicting the radio field level and/or radio propagation time according to claim 4, **characterized in that** the local environmental study of the impact point (A, B) to determine on the one hand whether the impact point (A, B) is an element of a façade or a corner and on the other hand, the corner of said facade or the two corners of the corner of two facades which construct the point, is carried out by a facade and corner detection method consisting in identifying one or two segments of straight lines whose positions and angles are precisely known, this or these straight line segment(s) precisely describing the position and orientation of the facade if the impact point (A, B) is an element of a facade, and the position and orientation of the two facades forming the corner if the impact point (A, B) is an element of a corner, the impact point (A, B) being finally determined as an element of a façade if only one line segment or two line segments with a close orientation have been previously identified, otherwise the impact point (A, B) is an element of a corner, and the angle of the façade or the angles of the facades forming the corner are obtained by the orientation of the one or two identified line segments.

6. Method for predicting the radio field level and/or radio propagation time according to claim 5, **characterized in that** the identification of the one or both line segments whose positions and angles are precisely known is carried out by minimizing the distance between this or these two line segments and all the pixels detected as belonging to the facade or to the two facades forming the corner, this last detection being done on the one hand by initially selecting the pixel of the impact point (A, B), then by iteratively selecting any pixel adjacent to a pixel already selected which is characterized on the one hand by a type of surface relief identical to the impact point and itself adjacent to a pixel having a type of surface relief different from the impact point (A, B), and on the other hand by not degrading the distance between the best two segments on the right with all the points already selected.

7. A method of predicting the radio field level and/or radio propagation time according to one of the above claims **characterised in that** the rays are launched in all horizontal directions using a reduced increment, each ray trace (Ri) being carried out in an optimised manner, i.e. a ray is launched at a given angle only if it is predicted that this ray will have a significant impact on the prediction, such a prediction being obtained by learning when previous ray trace (Ri) at neighbouring angles have had a significant impact on the prediction.

8. A method of predicting the radio field level and/or radio propagation time according to claim 7 **characterized in that** the prediction that a ray trace (Ri) at a given angle will have a significant impact on the prediction results from comparing to a threshold the number of pixels for which the prediction has been updated by the ray (Ri).

9. Method for predicting the radio field level and/or radio propagation time according to one of the above claims, **characterized in that**, when the impact point (A, B) of a ray (Ri) is detected, the couplet position of the impact point and angle of incidence of the ray on the impact point is stored in a base of couplets and the ray Ri) continues its path by reflection (Rr), or diffraction/diffusion (Rd) following the point of impact (A, B) only if the couplet point of impact and angle of incidence of the ray is significantly different from the couplets stored during the previous ray traces (Ri).

Figure 1a

Figure 1b

Figure 2a

Figure 2b

Figure 3a

Figure 3b

Figure 4a

Figure 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 974497 A

- EP 2230863 A2

**Littérature non-brevet citée dans la description**

- **COMBEAU P. et al.** *Efficient 2-D ray-tracing method for narrow and wideband channel characterisation in microcellular configurations*
- **CORRY Y. et al.** *Three-Dimensional Urban EM Wave Propagation Model for Radio Network Planning and Optimization Over Large Areas*

- **ZHIHUA LAI et al.** *A new approach to solve angular dispersion of discrète ray launching for urban scénarios*